# EUROPÄISCHE PATENTSCHRIFT

(11) **EP 0 520 154 B1**
(45) Veröffentlichungstag und Bekanntmachung des Hinweises auf die Patenterteilung: **13.12.1995**
(21) Anmeldenummer: 92106976.1
(22) Anmeldetag: 23.04.1992
(51) Int. Cl.: B62H 5/00

(54) **Anordnung eines Kabelschlosses an einem Zweiradrahmen**
Cable locking device on a two wheel frame
Dispositif de fixation d'un câble sur un cadre de bicyclette

(30) Priorität: 24.06.1991 DE 4120814
(43) Veröffentlichungstag der Anmeldung: 30.12.1992
(73) Patentinhaber: Aug. Winkhaus GmbH & Co. KG, D-48291 Telgte (DE)
(72) Erfinder: Kortenbrede, Ludger, W-4404 Telgte (DE)
(74) Vertreter: Weickmann, Heinrich, Dipl.-Ing.

(56) Entgegenhaltungen:
- EP-A- 0 415 355
- CH-A- 638 735
- DE-U- 8 903 908
- DE-U- 9 012 512
- US-A- 5 007 260

## Beschreibung

Die Erfindung betrifft ein Kabelschloß, insbesondere ein Spiralkabelschloß, zur Anordnung an einem Zweiradrahmen, umfassend eine mit einer Schließmechanik ausgerüstete Schließeinheit, welche mit einem ersten Ende eines Schließkabels betriebsmäßig unlösbar verbunden ist, und ein an einem zweiten Ende des Schließkabels angebrachtes Gegenschließstück, welches in eine Gegenschließstück-Aufnahme der Schließeinheit einführbar und darin durch die Schließmechanik verriegelbar ist, wobei der Schließeinheit ein Halterungselement zugeordnet ist und dieses Halterungselement zur Befestigung der Schließeinheit an dem Zweiradrahmen unter Vermittlung eines Befestigungsmittels ausgebildet ist, wobei die Schließeinheit auch bei nicht eingeführtem Gegenschließstück gegen eine Trennung von dem Halterungselement an diesem festgelegt ist.

Eine solche Anordnung ist aus der US-PS 4 028 916 bekannt. Bei dieser bekannten Ausführungsform ist das erste Ende des Schließkabels mit der Schließeinheit verbunden. Die Schließeinheit ist durch eine Klemmschelle an einem Rahmenrohr befestigt. Diese Klemmschelle ist durch einen Schraubbolzen gesichert. Der Schraubbolzen ist jederzeit frei zugänglich und ist daher von einem Unbefugten lösbar. Versäumt es der Zweiradbesitzer beim Sichern seines Rads, das Schloßkabel um ein Rahmenelement herum zum Ring zu schließen, so besteht die Gefahr, daß der Unbefugte das Zweirad durch Lösen der Befestigungsschelle entwenden kann.

Aus der EP-A-O 437 211, die Stand der Technik im Sinne des Art. 54 (3) EPÜ darstellt, ist ein an einem Zweiradrahmen anbringbares Halterungselement für ein Ringschloß bekannt. Dabei kann die Schließeinheit lösbar in einen Halterungstopf eingesetzt werden, welcher an einem Rahmenrohr durch eine Klemmschelle befestigt werden kann. Die Schließeinheit wird dabei in den Halterungstopf eingeschoben; es sind jedoch keine Maßnahmen offenbart, die eine Trennung der Schließeinheit von dem Halterungselement beim Einführen des Gegenschließstücks in die Schließeinheit verhindern könnten. Wenn die Schließeinheit in den Halterungstopf eingesetzt und das Gegenschließstück durch eine Öffnung des Halterungstopfes hindurch in die Schließeinheit eingesteckt und durch die Schließmechanik verriegelt ist, so ist eine die Befestigung der Klemmschelle an dem Rahmenrohr übernehmende Befestigungsschraube unzugänglich.

Der Erfindung liegt die Aufgabe zugrunde, eine Anordnung zu schaffen, bei der selbst dann, wenn der Fahrradbesitzer das Schließkabel versehentlich nicht um einen Rahmenteil des Zweiradrahmens herum zum Ring schließt, ein Entwenden des Fahrrads jedenfalls nicht ohne zerstörende Einwirkung möglich ist.

Zur Lösung dieser Aufgabe wird vorgeschlagen, daß das Halterungselement des eingangs genannten Kabelschlosses in solcher Lage zur Schließeinheit angeordnet ist, daß das Befestigungsmittel bei Aufnahme und Verriegelung des Gegenschließstücks in der Gegenschließstück-Aufnahme unzugänglich ist.

Infolge dieser Unzugänglichkeit des Befestigungsmittels besteht für einen Unbefugten auch nicht die Möglichkeit, das Fahrrad unter Lösung des Befestigungsmittels zu entwenden.

Die erfindungsgemäße Anordnung läßt sich insbesondere zur Anbringung von Kabel- und Spiralkabelschlössern verwenden, wie sie in der europäischen Offenlegungsschrift 415 355-A2 vom 06.03.1991 offenbart sind.

Wenn die Schließeinheit mit einem für ihre Funktion notwendigen Hauptgehäuse ausgeführt ist, so kann der Umfassungstopf zur betriebsmäßig unlösbaren Aufnahme dieses Hauptgehäuses ausgebildet sein. Eine solche Ausgestaltung der Erfindung bietet den Vorteil, daß Kabelschlösser, die nicht ausschließlich zum betriebsmäßig unlösbaren Anbau am Zweiradrahmen bestimmt sind, durch Zusammensetzen mit dem Umfassungstopf angewandt werden können.

Die Verbindung des Umfassungstopfes mit der Schließeinheit kann beispielsweise dadurch hergestellt werden, daß der Umfassungstopf mit der Schließeinheit durch Verformung aneinander anliegender Flächen des Umfassungstopfes und der Schließeinheit verbunden ist. Insbesondere ist es möglich, daß daß der Umfassungstopf durch gemeinsame Deformation aneinander anliegender Flächen des Umfassungstopfes und des Funktionsgehäuses verbunden ist.

Häufig versucht man, das Haupt- oder Funktionsgehäuse einer Schließeinheit durch ein Außengehäuse gegen Witterung zu schützen und/oder dekorativ auszugestalten. Ist nun nach dem Vorschlag der Erfindung ein Umfassungstopf vorgesehen, welcher das Hauptgehäuse bereits teilweise einschließt, so kann man ein komplettes Außengehäuse dadurch gewinnen, daß man zusätzlich zu dem Umfassungstopf nur noch eine Schutzkappe vorsehen muß, die sich mit dem Umfassungstopf zu einem Außengehäuse ergänzt, also nicht das ganze Hauptgehäuse bedecken muß.

Alternativ ist es aber auch möglich, daß bei Vorhandensein eines Haupt- oder Funktionsgehäuses der Umfassungstopf einen Teil dieses Haupt- oder Funktionsgehäuses bildet. Man erhält dann ein spezifisch auf den Anbau am Zweiradrahmen bestimmtes Kabelschloß, das wegen des Anbaus des Halterungselements an dem Umfassungstopf nicht zur allgemeinen Verwendung geeignet ist, hat aber den Vorteil, daß man zu einer besonders kostengünstigen, aus einer geringen Zahl von Komponenten bestehenden Lösung kommt.

Die Sicherung gegen unbefugte Trennung des Kabelschlosses vom Zweiradrahmen - gleichgültig, ob das Rad abgeschlossen ist oder ob das Kabelschloß sich nur in Mitführposition befindet - kann dadurch auf einfache Weise realisiert werden, daß das Halterungselement mit einem zweiradseitigen Halterungsteil verschraubt ist und daß eine Werkzeugangriffsstelle mindestens einer Befestigungsschraube durch das Gegenschließstück oder ein mit dem Gegenschließstück verbundes Teil abdeckbar ist.

Um der Schließeinheit eine definierte und - auch bei Nacht - immer wieder leicht auffindbare Stellung an dem Zweiradrahmen zu vermitteln, wird vorgeschlagen, daß das Halterungselement und das zweiradseitige Halterungsteil in formschlüssigem Eingriff stehen.

Zusätzlich oder alternativ ist es zum gleichen Zweck auch möglich, daß das Halterungselement eine Wannenfläche zur Anlage an einem Rohrprofil des Zweiradrahmens aufweist.

Ist das Hauptgehäuse der Schließeinheit in einem gesonderten Umfassungstopf aufgenommen, so kann die Sicherung der Orientierung der Schließeinheit gegenüber dem Zweiradrahmen zusätzlich dadurch bewirkt werden, daß das Hauptgehäuse unverdrehbar in dem Umfassungstopf aufgenommen ist.

Aus Gründen einer möglichst berührungsgesicherten und berührungsfreundlichen Anbringung der Schließeinheit an dem Zweiradrahmen ist vorgesehen, daß die Gegenschließaufnahme annähernd parallel zur Längsachse eines die Schließeinheit tragenden Rahmenrohrs angeordnet ist. Dabei wird davon ausgegangen, daß sich die Schließmechanik im wesentlichen um die Achse der Gegenschließstückaufnahme gruppiert, wie dies insbesondere bei der bekannten Ausführungsform aus der europäischen Offenlegungsschrift 415 355-A2 der Fall ist. Es wird dann eine relativ schlanke Bauform der Schließeinheit in Parallelstellung zum jeweiligen Rahmenrohr erreicht.

Bevorzugt ist das erste Ende des Schließkabels in der Schließeinheit verankert, so daß am Zweiradrahmen außer der Bereitstellung der Befestigungsstelle für den Umfassungstopf kein weiterer Eingriff für die Verankerung des ersten Schließkabelendes vorgenommen werden muß. Dabei empfiehlt es sich, daß das erste Schließkabelende im wesentlichen senkrecht zur Achse der Gegenschließstückaufnahme in die Schließeinheit einläuft. Es ergibt sich dann eine Festlegung des Schließkabels an der Schließeinheit innerhalb einer Ebene in zwei zueinander senkrechten Richtungen. Dies ist besonders günstig im Hinblick auf eine stabile Festlegung des Schließkabels, insbesondere eines Spiralkabels an der Schließeinheit.

Weiterbildungen der Erfindung ergeben sich insbesondere auch aus der Kombination der vorstehend behandelten Halterungsmerkmale mit den Schloßmerkmalen nach der europäischen Offenlegungsschrift 415 355-A2.

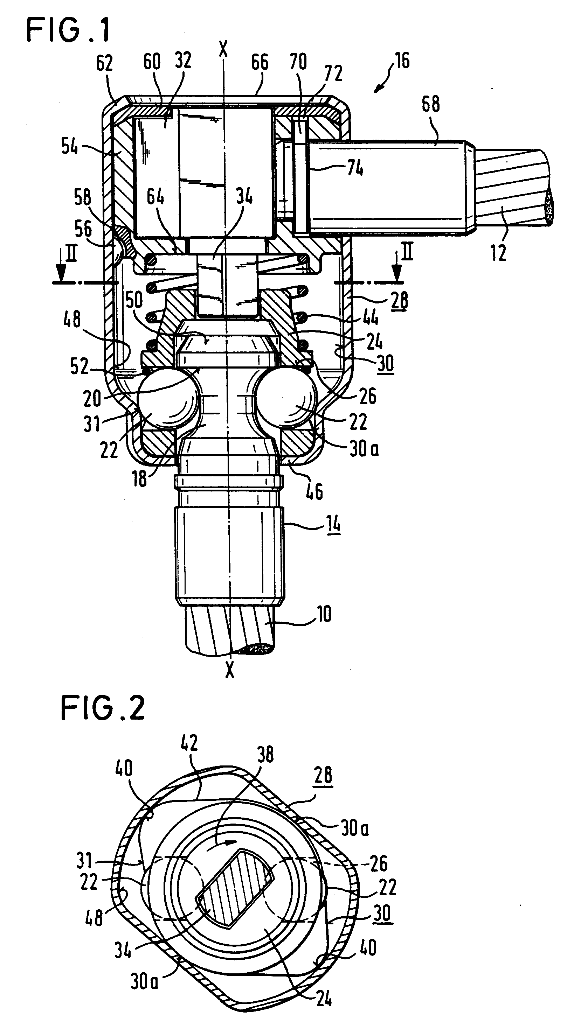

Die beiliegenden Figuren erläutern die Erfindung anhand eines Ausführungsbeispiels. Dabei zeigen die Figuren 1 bis 12 die Grundkonzeption des aus der europäischen Offenlegungsschrift 415 355-A2 an sich bekannten Kabelschlosses, das in Verbindung mit der erfindungsgemäßen Anordnung besonders vorteilhaft ist. Im einzelnen stellen dar:
- Fig. 1: einen Längsschnitt durch eine mit einem Gegenschließstück gekuppelte Schließeinheit;
- Fig. 2: einen Schnitt nach Linie II-II in der Fig. 1;
- Fig. 3: eine Abwandlung zur Ausführungsform nach Fig. 1;
- Fig. 4: eine weitere Abwandlung zur Ausführungsform nach Fig. 1;
- Fig. 5: einen Schnitt entlang der Linie V-V in der Fig. 4;
- Fig. 6a: eine vergrößerte, perspektivische Darstellung eines Drehteils gemäß Fig. 4 in Richtung eines Pfeiles Z in Fig. 4;
- Fig. 6b: eine Untersicht des Drehteils gemäß Fig. 6a;
- Fig. 7: einen Längsschnitt durch die Schließeinheit gemäß Figur 4, wobei sich das Gegenschließstück in seiner ersten Ausweichstellung befindet;
- Fig. 8: einen Schnitt entlang der Linie VIII-VIII in Fig. 7.
- Fig. 9: eine erfindungsgemäße Anordnung eines Kabelschlosses gemäß Fig. 1-8 an einem Zweiradrahmen;
- Fig. 10: eine alternative Anordnung zu Figur 9;
- Fig. 11: eine erfindungsgemäße Anordnung eines Spiralkabelschlosses an einem Rahmenrohr eines Zweiradrahmens und
- Fig. 12: verschiedene Anbringungspositionen für eine erfindungsgemäße Anordnung an einem Zweiradrahmen.

In Fig. 1 ist eine Schließvorrichtung für ein Kabelringschloß dargestellt, wobei die beiden Enden eines Schließkabels mit 10 und 12 bezeichnet sind. Das eine Ende 10 des Schließkabels ist mit einem Steckerteil oder Gegenschließstück 14 verbunden, das andere Ende 12 des Schließkabels ist mit einer ganz allgemein mit 16 bezeichneten Steckerteilaufnahme oder Schließeinheit verbunden.

Das Steckerteil 14 weist eine Einschnürung 18 mit einer Rastschulter 20 auf. Diese Rastschulter 20 hintergreift in Fig. 1 Rastkörper bildende Rastkugeln 22, welche in einem glockenförmigen Rastkörperführungselement 24 aufgenommen sind, und zwar in Führungsdurchgängen 26 das Rastkörperführungselements 24. Das Rastkörperführungselement 24 ist innerhalb eines Gehäuses 28 der Steckerteilaufnahme 16 untergebracht. Die Rastkugeln 22 sind in dem Zustand gemäß Fig. 1 und 2 (Sperrstellung des Rastkörperführungselements 24) nach radial außen dadurch unbeweglich, daß sie an Steuerflächenbereiche 31 einer Steuerfläche 30 an einer Innenseite des Gehäuses 28 anliegen.

Das Rastkörperführungselement 24 ist in dem in Fig. 1 dargestellten Zustand gegen Verdrehung um die Achse X-X durch ein schlüsselbetätigtes Schließwerk d.h. eine Schließmechanik 32 gesichert, und zwar durch einen Schließzylinderkern 32a mit einem einstückig angeformten Drehteil 34, der in dem Schließwerk 32 drehbar gelagert ist, bei gezogenem Schlüssel (nicht gezeigt) gegenüber dem Schließwerk 32 unverdrehbar die in Fig. 1 und 2 dargestellte Drehstellung einnimmt und nach Stocken des Schlüssels mittels des Schlüssels aus der in Fig. 1 und 2 gezeigten Stellung heraus im Uhrzeigersinn verdreht werden kann.

Das Rastkörperführungselement 24 weist eine Drehmitnahmeöffnung 24a auf, in welcher das Drehteil 34 eingreift. Auf diesem Drehteil 34 des Schließzylinderkerns 32a sitzt das Rastkörperführungselement 24.

Zum Öffnen der Schließvorrichtung wird nach Stecken des Schlüssels der Schließzylinderkern 32a zusammen mit dem Drehteil 34 und damit auch das Rastkörperführungselement 24 im Uhrzeigersinn, d.h. in Pfeilrichtung 38 der Fig. 2 gedreht, so daß die Rastkugeln 22 in Steuerflächenbereiche 40 der Steuerfläche 30 gelangen und radial auswärts gegenüber der Achse X-X ausweichen können (zweite Ausweichstellung des Rastkörperführungselements 24). Die Steuerflächenbereiche 40 der Steuerfläche 30 sind dadurch gebildet, daß die Steuerfläche 30 in ihrem unteren Bereich, wie bei 42 angedeutet, einen rautenförmigen Querschnitt besitzt.

Wenn die Rastkugeln 22 den Steuerflächenbereichen 40 gegenüberstehen, so können sie beim Abziehen des Steckerteils 14 nach radial außen ausweichen, so daß der Steckerteil 14 aus der Steckerteilaufnahme 16 herausgenommen werden kann. Die Radial-Auswärts-Verdrängung der Rastkugeln 22 ist durch entsprechende Profilierung der Einschnürung 18 möglich, und insbesondere dadurch, daß die Rastschulter 20 radial einwärts des Kugelmittelpunkts der Rastkugeln 22 an diesen anliegt.

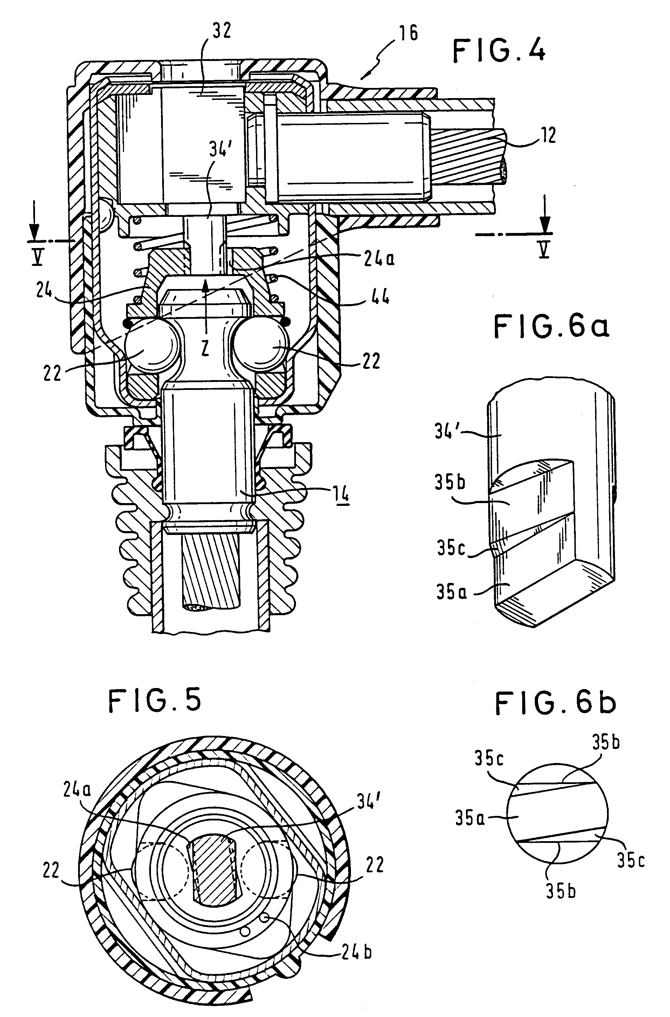

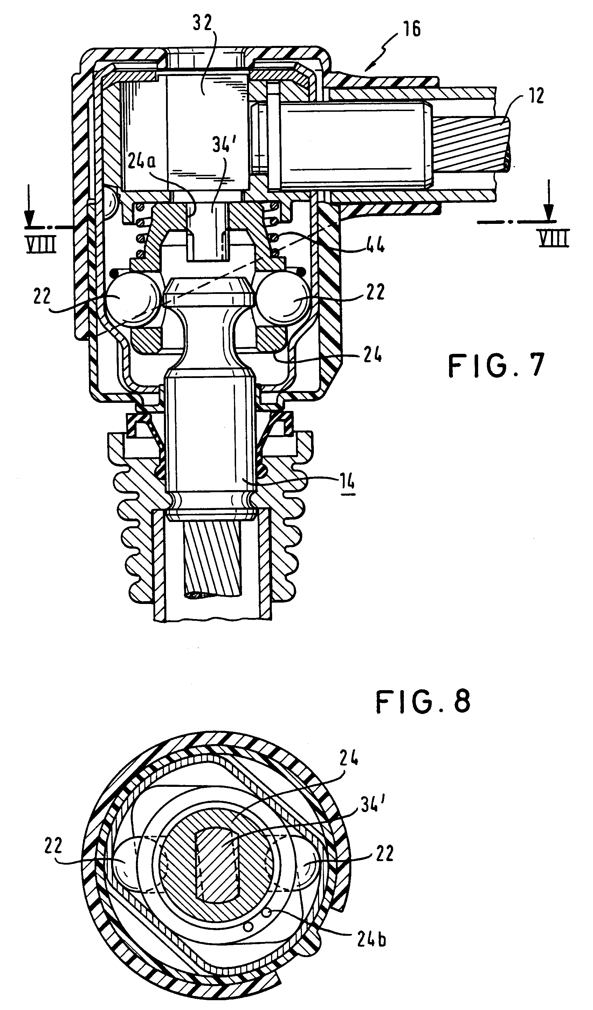

Das Rastkörperführungselement 24 ist durch eine an ihm festgelegte Schraubenfeder 44 nach unten gedrückt gegen eine untere Anschlagfläche 46 des Gehäuses 28. Gleichzeitig unterliegt das Rastkörperführungselement 24 durch die Schraubenfeder 44 einer Torsionsvorspannung, welche das Rastkörperführungselement 24 in eine Stellung zu drehen sucht, in welcher die Rastkugeln 22 an den Steuerflächenbereichen 31 anliegen. Zur Festlegung der Schraubenfeder 44 ist dabei ein Drahtende der Feder 44 in eine Aufnahmebohrung 24b des Rastkörperführungselements eingeschoben (vgl. Fig. 4 und 7).

Nach Auskuppeln des Steckerteil 14 und Loslassen des Schlüssels kehrt also das Rastkörperführungselement 24 unter der Wirkung der Schraubenfeder 44 in die Stellung zurück, in welcher die Rastkugeln 22 an den Steuerflächenbereichen 31 anliegen (Bereitschaftsstellung zum Verrasten). Dabei können trotz der Auskupplung des Steckerteils 14 die Rastkugeln 22 nicht nach radial innen aus den Führungsdurchgängen 26 herausfallen, weil die Führungsdurchgänge 26 an ihren radial inneren Enden eingeengt sind, wodurch die Rastkugeln 22 zurückgehalten werden.

Zum erneuten Einkuppeln des Steckerteils 14 in die Steckerteilaufnahme 16 bedarf es einer Schlüsselbetätigung nicht. Das Steckerteil 14 wird dabei, bezogen auf die Darstellung der Schließvorrichtung in Fig. 1, von unten in das glockenförmige Rastkörperführungselement 24 eingeführt und stößt dabei gegen die Rastkugeln 22. Da die Rastkugeln 22 an den Steuerflächenbereichen 31 anliegen, können sie zunächst nicht nach radial auswärts ausweichen. Wohl aber kann das Rastkörperführungselement 24 durch den nach oben eingedrückten Steckerteil 14 unter Vermittlung der Rastkugeln 22 gegen die Wirkung der Schraubenfeder 44 nach oben verschoben werden, wobei das Rastkörperführungselement 24 auf dem Schließzylinderkern 32a nach oben verfahren wird (erste Ausweichstellung des Rastkörperführungselements 24, vgl. Fig. 7). Dabei gelangen die Rastkugeln 22 als Folge der Aufwärtsverschiebung des Rastkörperführungselements 24 in Steuerflächenbereiche 48 der Steuerfläche 30. Zur Bildung dieser Steuerflächenbereiche 48 ist das Gehäuse 28 auf der Höhe des Querschnitts II-II gegenüber dem rautenförmigen Querschnitt 42 des unteren Bereichs erweitert. Wenn die Rastkugeln 22 in die Steuerflächenbereiche 48 gelangen, so werden sie durch eine Rastkörperverdrängungsschräge 50 am oberen Ende des Steckerteils 14 nach radial außen verdrängt, so lange, bis die Rastschulter 20 über die Rastkugeln 22 hinweggegangen ist und die Rastkugeln 22 wieder in die Einschnürung 18 eintreten können. Wenn der Einführungsdruck auf das Steckerteil 14 weggenommen wird, so bewegt sich das Rastkörperführungselement 24 unter dem Druck der Schraubenfeder 44 wieder nach unten. Die Rastkugeln 22 gelangen wieder in die Steuerflächenbereiche 31 und werden dadurch wieder radial einwärts in die Einschnürung 18 des Steckerteils 14 hineingedrückt, so daß der Zustand gemäß Fig. 1 und 2 wiederhergestellt ist. Die Radial-Einwärts-Bewegung der Rastkugeln 22 kann dabei dadurch unterstützt werden, daß an dem radial äußeren Teil der Rastkugeln 22 ein elastischer O-Ring 52 anliegt, welcher die beiden Rastkugeln 22 radial einwärts zu drängen sucht.

Das Schließwerk 32 ist innerhalb des Gehäuses 28 untergebracht, und zwar in einem panzernden Innengehäuse 54, welches in seiner Einbaustellung durch Warzen 56 des Gehäuses 28 und entsprechende Ausnehmungen 58 am unteren Rand des Innengehäuses 54 festgelgt ist. Nach oben ist das Innengehäuse 54 durch eine Abdeckscheibe 60 gesichert, die durch eine Umbördelung 62 des Gehäuses 28 festgehalten ist. Die Schraubenfeder 44 stützt sich in einer Vertiefung 64 des Innengehäuses 54 ab. Die Abdeckscheibe 60 und die Umbördelung 62 sind ringförmig, so daß sie einen Zutritt 66 für den Schlüssel gewähren.

Das Schließwerk 32 kann ein herkömmlicher Schließzylinder sein, dessen Schließzylinderkern bei 32a bereits erwähnt wurde. Der Drehweg des Schließzylinderkerns 32a ist innerhalb des Schließwerks 32 so festgelegt, daß am einen Ende dieses Drehwegs die Rastkugeln 22 an den Steuerflächenbereichen 31 anliegen und am anderen Ende des Drehwegs die Rastkugeln 22 den Steuerflächenbereichen 40 gegenüberstehen. Die Schraubenfeder 44 erteilt dem Schließzylinderkern 32a eine Vorspannung in Richtung auf diejenige Endstellung, in welcher die Rastkugeln 22 den Steuerflächenbereichen 31 gegenüberstehen bzw. anliegen.

Das Ringkabelende 12 ist mit einem Kabelkloben 68 in dem Innengehäuse 54 verankert, und zwar vermittels eines U-Blättchens 70, welches in einen Schlitz 72 des Innengehäuses 54 vor Aufbringen der Abdeckscheibe 60 eingesteckt wird und in eine Ringnut 74 des Kabelklobens 68 eintritt. Durch Abflachungen an dem Kabelkloben 68 und entsprechende Gegenabflachungen des Innengehäuses 54 ist der Kabelkloben 68 gegen Verdrehen relativ zu dem Innengehäuse 54 gesichert.

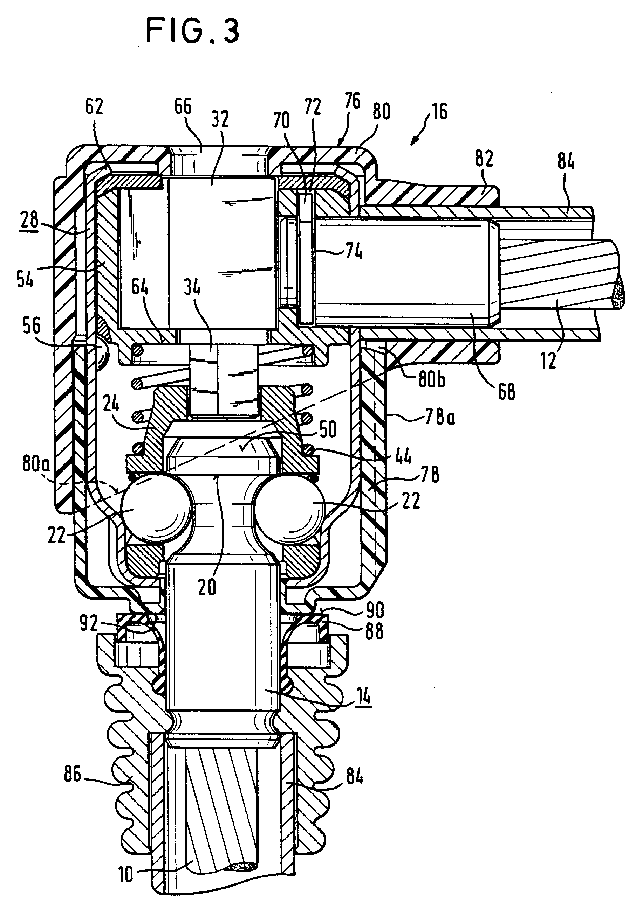

In Fig. 3 ist dargestellt, daß das Gehäuse 28 durch eine Kunststoffummantelung 76 abgedeckt ist. Die Kunststoffummantelung 76 besteht aus zwei Mantelteilen 78 und 80, die zusammengesteckt und gegeneinander verrastet sind. Der Mantelteil 80 umfaßt eine Kabeldurchführung 82, welche einen das Kabel 12 umschließenden Kabelmantel 84 umfaßt. Der Mantelteil 80 ist an seinem unteren Ende 80a so abgeschrägt, daß er unter gleichzeitigem Heranschieben der Kabeldurchführung 82 an das Gehäuse 28 über die Umbördelung 62 hinweg gedrückt werden kann und dann in die Stellung nach Fig. 3 schnappt, in welcher er mit dem Mantelteil 78 verrastet werden kann. Eine Rippe 78a des Mantelteils 78 greift dabei in eine Ausnehmung 80b des Mantelteils 80 ein, so daß der Mantelteil 78 unverdrehbar festgelegt ist.

Im Bereich des Steckerteils 14 ist der Kabelmantel 84 von einem Schlußstück 86 umschlossen, welches auch den Steckerteil 14 umfaßt. Eine Silikon-Kautschuk-Hülse 88 ist an dem Steckerteil 14 durch das Schlußstück 86 festgelgt und liegt mit einer Endfläche 90 unter elastischer Vorspannung an einer Anlagefläche 92 des Mantelteils 78 an, so daß hier eine Abdichtung gebildet ist, welche ein Eindringen von Schmutz und Feuchtigkeit in das Innere der Steckerteilaufnahme 16 verhindert.

Daneben hat die axial elastische Silikon-Kautschuk-Hülse 88 noch eine andere Funktion: Sie erzeugt eine Vorspannung auf das Steckerteil 14 nach axial unten, durch welche die Rastschulter 20 gegen die Rastkugeln 22 gedrückt wird, so daß das Steckerteil 14 und die Rastkugeln 22 in der Verschlußstellung wackelfrei festgehalten sind.

Es ist noch zu bemerken, daß das Rastkörperführungselement 24 an dein Gehäuse 28 durch Führungsflächen 30a der Steuerfläche 30 im unteren Beeich der Steuerfläche 30 axial verschiebbar und drehbar geführt ist. Diese Führungsflächen 30a sind von Rundungen des rautenförmigen unteren Gehäuseteils 42 gebildet.

In den Fig. 4 - 8 ist eine weitere Ausführungsform der erfindungsgemäßen Schließvorrichtung gezeigt, wobei gleiche Bauteile mit gleichen Bezugszeichen versehen sind. Die dort gezeigte Schließvorrichtung unterscheidet sich von den in den Fig. 1 - 3 gezeigten Schließvorrichtungen dahingehend, daß sie ein modifiziertes Drehteil 34' besitzt. Dieses Drehteil 34' ist mit einem schließwerkfernen Abschnitt 35a kleineren Querschnitts versehen, der in die Drehmitnahmeöffnung 24a des Rastkörperführungselements 24 eingreift. Hierbei besteht zwischen der Drehmitnahmeöffnung 24a und diesem Abschnitt 35a kleineren Querschnitts ein Drehwinkelspiel (vgl. Fig. 5), welches jedoch durch die von der Schraubenfeder 44 aufgebrachte Drehvorspannung ausgeglichen wird, so daß zwischen dem Abschnitt 35a kleineren Querschnitts und dem Rastkörperführungselement 24 eine formschlüssige Drehmitnahmeverbindung besteht. Das Drehteil 34' besitzt darüber hinaus einen schließwerknahen Abschnitt 35b größeren Querschnitts, der in die Drehmitnahmeöffnung 24a dann eingreift, wenn sich das Rastkörperführungselement 24 in seiner ersten Ausweichstellung befindet (vgl. Fig. 7). Der Abschnitt 35a kleineren Querschnitts und der Abschnitt 35b größeren Querschnitts ist jeweils durch zwei parallel zueinander angeordnete Abflachungen des zylindrischen Drehteils 34' gebildet, wobei der Abschnitt 35a gegenüber dem Abschnitt 35b in Umfangsrichtung um einen Winkel, insbesondere einen Winkel zwischen 2° und 10°, vorzugsweise 6°, verdreht ist (vgl. Fig. 6a,6b). Der Übergang von dem Abschnitt 35a kleineren Querschnitts zu dem Abschnitt 35b größeren Querschnitts wird durch dachförmige Übergangsflächen 35c gebildet, welche gegenüber der Achse des Drehteils 34' einen Winkel, insbesondere einen Winkel zwischen 40° und 60°, vorzugsweise 50°, aufweisen. Die axiale Länge der beiden parallel zueinander angeordneten Flächen des Abschnitts 35a kleineren Querschnitts entspricht dabei im wesentlichen der Eintauchtiefe dieses Abschnitts 35a in die Drehmitnahmeöffnung 24a in der Grundstellung der Schließvorrichtung.

Wird das Rastkörperführungselement 24 aus seiner Grundstellung, in welcher der Abschnitt 35a kleineren Querschnitts des Drehteils 34' in die Drehmitnahmeöffnung 24a eingreift, durch das Einfahren des Steckerteils 14 in seine erste Ausweichstellung axial entlang dem Drehteil 34' verschoben, so erzwingen die Übergangsflächen 35c eine Relativdrehung des Rastkörperführungselements 24 gegenüber dem Drehteil 34' entgegen der Vorspannung der Schraubenfeder 44, wenn der Abschnitt 35b größeren Querschnitts in die Drehmitnahmeöffnung 24a eintritt (vgl. Fig. 7 und 8).

Der Abschnitt 35a kleineren Querschnitts, der Abschnitt 35b größeren Querschnitts und die Übergangsflächen 35c bilden zusammen eine Hemmeinrichtung. Diese Hemmeinrichtung läßt sich bei dem betriebsmäßigen Einführen des Steckerteils 14 in die Steckerteilaufnahme 16 ohne weiteres überwinden, wobei eine geringfügige Verdrehung des Rastkörperführungselements 24 gegenüber dem Drehteil 34' um den Winkel von 2° - 10°, vorzugsweise ca. 6° eintritt. Andererseits ist durch die Übergangsflächen 35c verhindert, daß bei einer Relativbeschleunigung des Steckerteils 14 und der Steckerteilaufnahme 16 das Rastkörperführungselement 24 auf den Abschnitt 35b größeren Querschnitts aufgleitet und das Rastkörperführungselement 24 damit in eine Ausweichstellung gelangt, in der die Rastkugeln 22 nach radial auswärts ausweichen können. Hierdurch wird verhindert, daß bei schlagartig auftretenden Massenkräften ein unbeabsichtigtes Öffnen der Schließvorrichtung eintritt, wodurch die Funktionssicherheit der Schließvorrichtung weiter gesteigert wird.

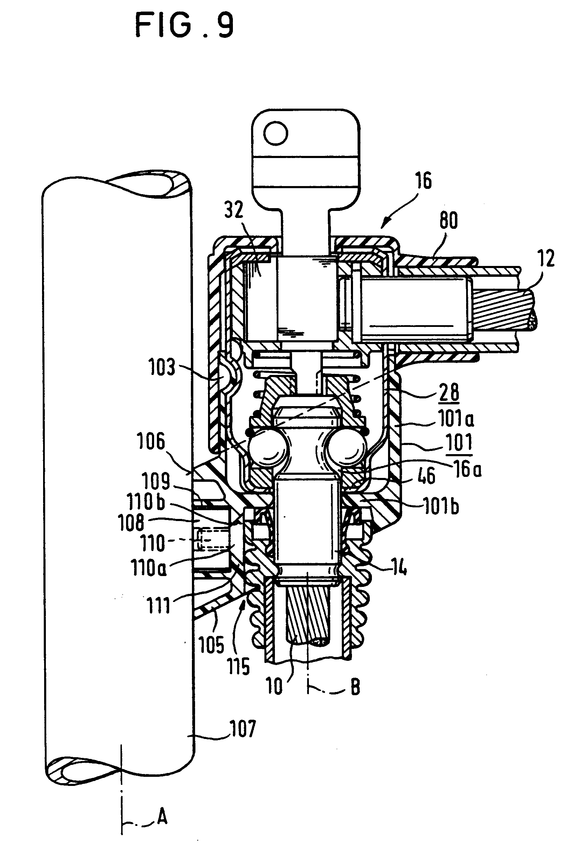

In Figur 9 ist das Haupt- oder Funktionsgehäuse 28 in einem Umfassungstopf 101 aufgenommen. Der Umfassungstopf weist einen Mantel 101a auf, der das Hauptgehäuse 28 umschließt und einen Boden 101b, gegen welchen die untere Anschlagfläche 46 des Gehäuses 28 anschlägt. Das Hauptgehäuse 28 ist in dem Umfassungstopf 101 durch eine Eindrückung 103 axial und in Drehrichtung gesichert. Diese Eindrückung erstreckt sich durch das Hauptgehäuse 28 in den Umfassungstopf 101 hinein. Der Umfassungstopf ist mit einem Halterungselement 105 zusammen einstückig hergestellt. Das Halterungselement 105 liegt mit einer zylindrischen Anlagefläche 106 an dem Rahmenrohr 107 an. An dem Rahmenrohr 107 ist ein unrundes Halterungsteil 108 angeschweißt oder angelötet, welches in eine komplementäre Kammer 109 des Halterungselements 105 eingreift. Eine Schraube 110 durchsetzt den Kammerboden 111 und greift in das Innengewinde des Halterungsteils 108 ein. Der Kopf der Schraube 110 ist durch das in die Schließeinheit 16 eingesteckte Gegenschließstück 14 gesichert.

Das Hauptgehäuse 28 ist teilweise von einem Mantelteil oder einer Kappe 80 umschlossen, welche sich mit dem Umfassungstopf 101 zu einem Außengehäuse ergänzt. Die Kappe 80 schließt an den Umfassungstopf 101 überlappend an und überdeckt die Eindrückung 103.

Man erkennt aus Figur 9 weiter, daß die Befestigungsschraube 110 mit einem Senkkopf 110a ausgeführt ist, welcher in einer Ansenkung 110b des Halterungselements 105 aufgenommen wird. Wenn dann das als schlanker Schließdorn ausgebildete Gegenschließstück 14 in einer Gegenschließstückaufnnahme 16a der Schließeinheit 16 seine Verriegelungsposition einnimmt, so ist der in dem Senkkopf 110a vorgesehene Angriffsschlitz für einen Schraubendreher einerseits vollständig durch den Schließdorn 14 abgedeckt und andererseits durch die seitliche Begrenzung der Ansenkung 110b. Zwischen dem Halterungselement 105 und dem Schließdorn 14 ist ein enger Spalt 115 gebildet, welcher für den Schraubendreher unzugänglich ist. Bevorzugt liegt die Befestigungsschraube 110 in einer Ebene, welche durch die Achse A des Rahmenrohrs 107 und die Achse B des Schließdorns 14 definiert ist.

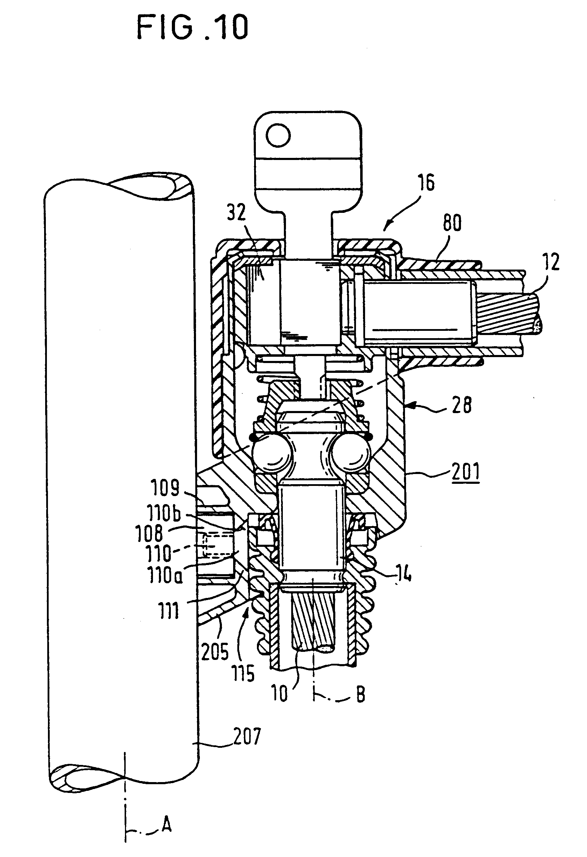

In der Ausführungsform nach Figur 10 ist das Hauptgehäuse 28 in seinem unteren Teil als ein Umfassungstopf 201 der Schließeinheit ausgebildet und zwar einstückig mit dem Halterungselement 205. Das Halterungselement 205 ist entsprechend ausgebildet und befestigt wie in Figur 9. Während in Figur 9 der Umfassungstopf 101 beliebig aus Kunststoff oder Metalldruckguß hergestellt sein kann, ist im Falle der Ausführungsform nach Figur 10 eine Herstellung des Hauptgehäuses 28 und damit auch des Umfassungstopfes 201 und des Halterungselements aus Metalldruckguß bevorzugt.

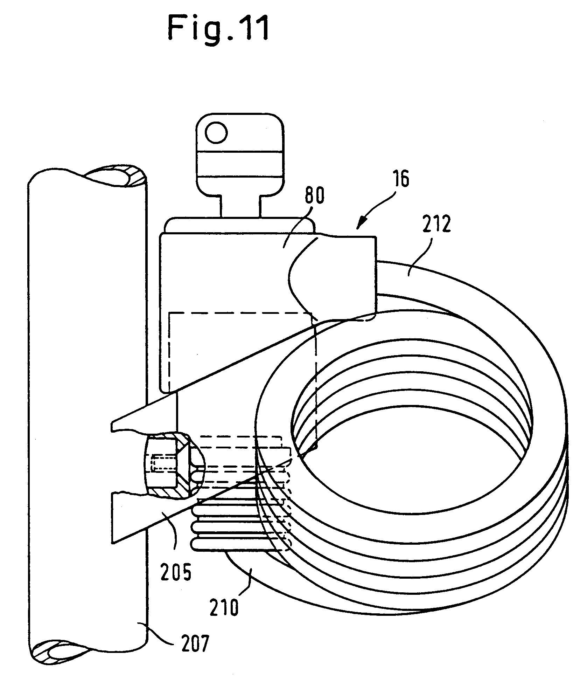

Man erkennt aus Figur 11, daß die Schließeinheit 16 im wesentlichen parallel und im Schatten des Rahmenrohrs 207 angebracht ist und daß die Spiralebene annähernd parallel oder unter kleinem spitzen Winkel zur Achse des Rahmenrohrs 207 liegt. Insbesondere kann man die Spiralebene annähernd parallel zur Rahmenebene einstellen.

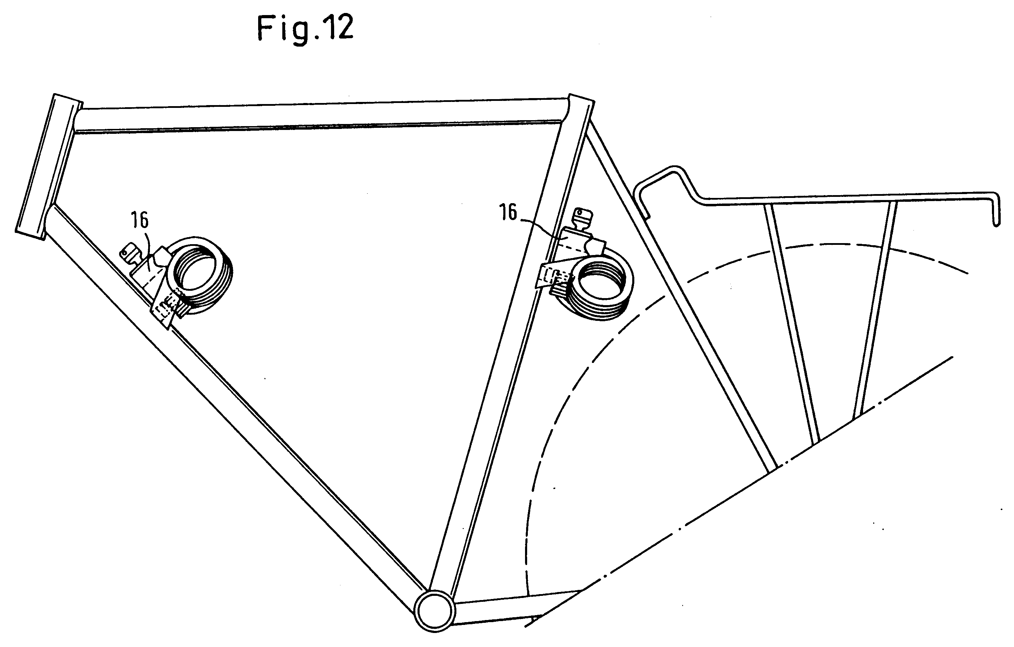

Figur 12 läßt erkennen, daß die Schließeinheit 16 an beliebiger Stelle am Rahmen angebracht werden kann, insbesondere dort, wo sie weder mit dem Radfahrer noch mit dem aufgesattelten Gepäck in Kollision tritt, also etwa an der Rückseite des Sattelrohrs oder innerhalb des Hauptrahmens.

## Patentansprüche

1. Kabelschloß, insbesondere Spiralkabelschloß,
zur Anordnung an einem Zweiradrahmen,
umfassend eine mit einer Schließmechanik (32) ausgerüstete Schließeinheit (16), welche mit einem ersten Ende (12) eines Schließkabels betriebsmäßig unlösbar verbunden ist und ein an einem zweiten Ende (10) des Schließkabels angebrachtes Gegenschließstück (14), welches in eine Gegenschließstückaufnahme (16a) der Schließeinheit (16) einführbar und darin durch die Schließmechanik (32) verriegelbar ist, wobei der Schließeinheit (16) ein Halterungselement (105) zugeordnet ist und dieses Halterungselement (105) zur Befestigung der Schließeinheit (16) an dem Zweiradrahmen (107) unter Vermittlung eines Befestigungsmittels (110) ausgebildet ist, wobei die Schließeinheit (16) auch bei nicht eingeführtem Gegenschließstück (14) gegen eine Trennung von dem Halterungselement (105) an diesem festgelegt ist,
dadurch gekennzeichnet,
daß das Halterungselement (105) in solcher Lage zur Schließeinheit (16) angeordnet ist, daß das Befestigungsmittel (110) nur bei Aufnahme und Verriegelung des Gegenschließstücks (14) in der Gegenschließstück-Aufnahme (16a) unzugänglich ist.

2. Kabelschloß nach Anspruch 1,
dadurch gekennzeichnet,
daß das Befestigungsmittel (110) bei Aufnahme und Verriegelung des Gegenschließstücks (14) in der Gegenschließstück-Aufnahme (16a) in einem Spalt (115) zwischen dem Halterungselement (105) und dem Gegenschließstück (14) liegt.

3. Kabelschloß nach Anspruch 1 oder 2,
dadurch gekennzeichnet,
daß das Gegenschließstück von einem schlanken rotationssymmetrischen Schließdorn (14) gebildet ist, welcher in seiner Verriegelungsposition an der in Anbaustellung gegenüber einem Rahmenrohr (107) befindlichen Schließeinheit (16) im wesentlichen achsparallel zu dem jeweiligen Rahmenrohr (107) liegt und daß die Angriffsstelle des Befestigungsmittels (110) in dieser Stellung des Schließdorns (14) annähernd in einer Ebene liegt, welche durch die Achse (B) des Schließdorns (14) und die Achse (A) des Rahmenrohrs (107) definiert ist.

4. Kabelschloß nach einem der Ansprüche 1 - 3,
dadurch gekennzeichnet,
daß eine Werkzeugangriffsstelle des Befestigungsmittels (110) an einem Senkkopf (110a) ausgebildet ist, welcher in einer Einsenkung (110b) des Halterungselements (105) aufnehmbar ist.

5. Kabelschloß nach einem der vorhergehenden Ansprüche,
dadurch gekennzeichnet,
daß die Schließeinheit (16) betriebsmäßig unlösbar in einem die Gegenschließstück-Aufnahme (16a) umschließenden Umfassungstopf (101) aufgenommen ist, dessen Boden (101b) eine Durchtrittsöffnung für das Gegenschließstück (14) aufweist und daß dieser Umfassungstopf (101) einstückig mit dem Halterungselement (105) ausgebildet ist.

6. Kabelschloß nach Anspruch 5,
dadurch gekennzeichnet,
daß die Schließeinheit (16) ein Hauptgehäuse (28) aufweist und daß der Umfassungstopf (101) zur betriebsmäßig unlösbaren Aufnahme dieses Hauptgehäuses (28) ausgebildet ist.

7. Kabelschloß nach Anspruch 6,
dadurch gekennzeichnet,
daß der Umfassungstopf (101) mit der Schließeinheit (16) durch Verformung aneinander anliegender Flächen (103) des Umfassungstopfes (101) und der Schließeinheit (16) verbunden ist.

8. Kabelschloß nach Anspruch 7,
dadurch gekennzeichnet,
daß der Umfassungstopf (101) durch gemeinsame Deformation aneinander anliegender Flächen (103) des Umfassungstopfes (101) und des Hauptgehäuses (28) verbunden ist.

9. Kabelschloß nach einem der Ansprüche 6 - 8,
dadurch gekennzeichnet,
daß das Hauptgehäuse (28) von einer Außenkappe (80) teilweise umschlossen ist, welche zusammen mit dem Umfassungstopf (101) ein im wesentlichen geschlossenes Außengehäuse (80,101) bildet.

10. Kabelschloß nach Anspruch 5,
dadurch gekennzeichnet,
daß die Schließeinheit ein Hauptgehäuse (28) aufweist und daß der Umfassungstopf (201) einen Teil dieses Hauptgehäuses (28) bildet.

11. Kabelschloß nach einem der Ansprüche 1 - 10,
dadurch gekennzeichnet,
daß das Halterungselement (105) mit einem zweiradseitigen Halterungsteil (108) verschraubt ist und daß eine Werkzeugangriffsstelle mindestens einer Befestigungsschraube (110) durch das Gegenschließstück (14) oder ein mit dem Gegenschließstück (14) verbundenes Teil abdeckbar ist.

12. Kabelschloß nach Anspruch 11,
dadurch gekennzeichnet,
daß das Halterungselement (105) und das zweiradseitige Halterungsteil (108) in formschlüssigem Eingriff stehen.

13. Kabelschloß nach Anspruch 11 oder 12,
dadurch gekennzeichnet,
daß das Halterungselement (105) eine Wannenfläche (106) zur Anlage an einem Rohrprofil (107) des Zweiradrahmens aufweist.

14. Kabelschloß nach einem der Ansprüche 1 - 13,
dadurch gekennzeichnet,
daß die Gegenschließstück-Aufnahme (16a) annähernd parallel zur Längsachse (A) eines die Schließeinheit (16) tragenden Rahmenrohrs (107) angeordnet ist.

15. Kabelschloß nach einem der Ansprüche 1 - 14,
dadurch gekennzeichnet,
daß das erste Ende (12) des Schließkabels in der Schließeinheit (16) verankert ist.

16. Kabelschloß nach Anspruch 15,
dadurch gekennzeichnet,
daß das erste Schließkabelende (12) im wesentlichen senkrecht zur Achse (B) der Gegenschließstück-Aufnahme (16a) in die Schließeinheit (16) einläuft.

## Claims

1. A cable lock, especially a helical cable lock, for arrangement on a bicycle frame, comprising a locking unit (16) provided with a locking mechanism (32), which locking unit (16) is operationally unreleasably connected with a first end (12) of a locking cable, and a locking counterpart (14) attached to the second end (10) of the locking cable, which locking counterpart (14) may be inserted into a locking counterpart receptacle (16a) of the locking unit (16) and locked therein by the locking mechanism (32), the locking unit (16) being associated with a holding member (105) and this holding member (105) being constructed to fasten the locking unit (16) to the bicycle frame (107) via a fastening means (110), the locking unit (16) being fixed to the holding member (105) against separation therefrom even when the locking counterpart (14) is not inserted, characterized in that the holding member (105) is arranged in such a position with respect to the locking unit (16) that the fastening means (110) is only inaccessible when the locking counterpart (14) is accommodated and locked in the locking counterpart receptacle (16a).

2. A cable lock according to claim 1, characterized in that, when the locking counterpart (14) is accommodated and locked in the locking counterpart receptacle (16a), the fastening means (110) lies in a gap (11) between the holding member (105) and the locking counterpart (14).

3. A cable lock according to claim 1 or claim 2, characterized in that the locking counterpart is formed of a slim rotationally symmetrical locking gudgeon (14), which, in its locking position on the locking unit (16) located opposite a frame tube (107) in the mounted position, lies substantially axially parallel to the respective frame tube (107) and in that the point of engagement of the fastening means (110) in this position of the locking gudgeon (14) lies approximately in a plane which is defined by the axis (B) of the locking gudgeon (14) and the axis (A) of the frame tube (107).

4. A cable lock according to any one of claims 1 to 3, characterized in that a tool engagement point of the fastening means (110) is provided on a countersunk head (110a), which may be accommodated in a recess (110b) in the holding member (105).

5. A cable lock according to any one of the preceding claims, characterized in that the locking unit (16) is accommodated operationally unreleasably in a containing dish (101) surrounding the locking counterpart receptacle (16a), the base (101b) of which dish (101) comprises a through-hole for the locking counterpart (14) and in that this containing dish (101) is constructed in one piece with the holding member (105).

6. A cable lock according to claim 5, characterized in that the locking unit (16) comprises a main housing (28) and in that containing dish (101) is constructed for operationally unreleasable accommodation of this main housing (28).

7. A cable lock according to claim 6, characterized in that the containing dish (101) is connected with the locking unit (16) by deformation of mutually adjoining faces (103) of the containing dish (101) and of the locking unit (16).

8. A cable lock according to claim 7, characterized in that the containing dish (101) is connected by common deformation of mutually adjoining faces (103) of the containing dish (101) and of the main housing (28).

9. A cable lock according to any one of claims 6 to 8, characterized in that the main housing (28) is partially enclosed by an outer cap (80), which, together with the containing dish (101), forms a substantially closed outer housing (80, 101).

10. A cable lock according to claim 5, characterized in that the locking unit comprises a main housing (28) and in that the containing dish (201) forms part of this main housing (28).

11. A cable lock according to any one of claims 1 to 10, characterized in that the holding member (105) is screwed together with a holding part (108) on the bicycle side and in that a tool engagement point for at least one fastening screw (110) is coverable by the locking counterpart (14) or a part connected with the locking counterpart (14).

12. A cable lock according to claim 11, characterized in that the holding member (105) and the holding part (108) on the bicycle side are in form-fitting engagement.

13. A cable lock according to claim 11 or claim 12, characterized in that the holding member (105) comprises a trough-form surface (106) for positioning against a tube profile (107) of the bicycle frame.

14. A cable lock according to any one of claims 1 to 13, characterized in that the locking counterpart receptacle (16a) is arranged approximately parallel to the longitudinal axis (A) of a frame tube (107) carrying the locking unit (16).

15. A cable lock according to any one of claims 1 to 14, characterized in that the first end (12) of the locking cable is anchored in the locking unit (16).

16. A cable lock according to claim 15, characterized in that the first locking cable end (12) extends into the locking unit (16) substantially perpendicularly to the axis (B) of the locking counterpart receptacle (16a).

## Revendications

1. Serrure de câble, en particulier serrure de câble spiralé, destinée à être placée sur un cadre de deux roues, comprenant une unité de fermeture (16) équipée d'un mécanisme de fermeture (32), laquelle est reliée de manière inamovible en fonctionnement avec une première extrémité (12) d'un câble de fermeture et une contre-pièce de fermeture (14), fixée à une seconde extrémité (10) du câble de fermeture, qui peut être introduite dans un logement de contre-pièce de fermeture (16a) de l'unité de fermeture (16) et verrouillée à l'intérieur du logement par le mécanisme de fermeture (32), dans laquelle à l'unité de fermeture (16) est associé un élément de fixation (105) et cet élément de fixation (105) est conçu pour la fixation de l'unité de fermeture (16) sur le cadre de deux roues (107), par l'intermédiaire d'un moyen de fixation (110), et dans laquelle l'unité de fermeture (16) est fixée sur l'élément de fixation (105), en étant empêchée de se séparer de celui-ci, même lorsque la contre-pièce de fermeture (14) n'est pas introduite,
caractérisée en ce que
l'élément de fixation (105) est placé dans une position par rapport à l'unité de fermeture (16) telle que le moyen de fixation (110) est inaccessible uniquement lorsque la contre-pièce de fermeture (14) est logée et verrouillée dans le logement (16a) de la contre-pièce de fermeture.

2. Serrure de câble selon la revendication 1,
caractérisée en ce que
le moyen de fixation (110) se trouve dans un interstice (115), entre l'élément de fixation (105) et la contre-pièce de fermeture (14), lorsque la contre-pièce de fermeture (14) est logée et verrouillée dans le logement (16a) de la contre-pièce de fermeture.

3. Serrure de câble selon la revendication 1 ou 2,
caractérisée en ce que
la contre-pièce de fermeture est formée par une broche de fermeture (14) de forme élancée, à symétrie de révolution, qui dans sa position de verrouillage sur l'unité de fermeture (16), se trouvant en position de montage face à un tube de cadre (107), est sensiblement d'axe parallèle au tube de cadre (107) respectif et en ce que le point d'attaque du moyen de fixation (110), dans cette position de la broche de fermeture (14), se situe approximativement dans un plan qui est défini par l'axe (B) de la broche de fermeture (14) et par l'axe (A) du tube de cadre (107).

4. Serrure de câble selon l'une des revendications 1 à 3,
caractérisée en ce qu'
un point d'attaque d'outil du moyen de fixation (110) est réalisé sur une tête fraisée (110a), qui peut être logée dans un enfoncement (110b) de l'élément de fixation (105).

5. Serrure de câble selon l'une des revendications précédentes,
caractérisée en ce que
l'unité de fermeture (16) est logée, en fonctionnement, de manière inamovible dans un pot de pourtour (101) entourant le logement (16a) de la contre-pièce de fermeture, dont le fond (101b) présente une ouverture de passage pour la contre-pièce de fermeture (14) et en ce que ce pot de pourtour (101) est réalisé d'une seule pièce avec l'élément de fixation (105).

6. Serrure de câble selon la revendication 5,
caractérisée en ce que
l'unité de fermeture (16) comporte un boîtier principal (28) et en ce que le pot de pourtour (101) est conçu pour recevoir de manière inamovible, pendant le fonctionnement, ce boitier principal (28).

7. Serrure de câble selon la revendication 6,
caractérisée en ce que
le pot de pourtour (101) est relié à l'unité de fermeture (16) par déformation de surfaces (103) s'appliquant l'une contre l'autre du pot de pourtour (101) et de l'unité de fermeture (16).

8. Serrure de câble selon la revendication 7,
caractérisée en ce que
le pot de pourtour (101) est relié par déformation commune de surfaces (103) s'appliquant l'une contre l'autre du pot de pourtour (101) et du boitier principal (28).

9. Serrure de câble selon l'une des revendications 6 à 8,
caractérisée en ce que
le boîtier principal (28) est en partie entouré par un capuchon extérieur (80), qui forme avec le pot de pourtour (101) un boîtier extérieur (80, 101) sensiblement fermé.

10. Serrure de câble selon la revendication 5,
caractérisée en ce que
l'unité de fermeture comporte un boîtier principal (28) et en ce que le pot de pourtour (201) fait partie de ce boîtier principal (28).

11. Serrure de câble selon l'une des revendications 1 à 10,
caractérisée en ce que
l'élément de fixation (105) est vissé sur une partie de fixation (108) côté deux roues et en ce qu'un point d'attaque d'outil d'au moins une vis de fixation (110) peut être recouvert par la contre-pièce de fermeture (14) ou par un élément lié à la contre-pièce de fermeture (14).

12. Serrure de câble selon la revendication 11,
caractérisée en ce que
l'élément de fixation (105) et la partie de fixation (108) côté deux roues sont en prise par concordance de formes.

13. Serrure de câble selon la revendication 11 ou 12,
caractérisée en ce que
l'élément de fixation (105) présente une surface en cuvette (106) destinée à s'appliquer contre un profil de tube (107) du cadre de deux roues.

14. Serrure de câble selon l'une des revendications 1 à 13,
caractérisée en ce que
le logement (16a) de la contre-pièce de fermeture est sensiblement parallèle à l'axe longitudinal (A) d'un tube de cadre (107) portant l'unité de fermeture (16).

15. Serrure de câble selon l'une des revendications 1 à 14,
caractérisée en ce que
la première extrémité (12) du câble de fermeture est ancrée dans l'unité de fermeture (16).

16. Serrure de câble selon la revendication 15,
caractérisée en ce que
la première extrémité (12) du câble de fermeture est sensiblement perpendiculaire à l'axe (B) du logement (16a) de la contre-pièce de fermeture dans l'unité de fermeture (16).
